# EUROPÄISCHE PATENTSCHRIFT

(11) **EP 3 393 849 B1**
(45) Veröffentlichungstag und Bekanntmachung des Hinweises auf die Patenterteilung: **16.10.2019**
(21) Anmeldenummer: 16816614.8
(22) Anmeldetag: 09.12.2016
(51) Int. Cl.: B60N 2/38, B60N 2/50, B60N 2/64

(54) **RÜCKENLEHNE MIT INTEGRIERTER OBERKÖRPERSTÜTZE**
BACKREST WITH INTEGRATED UPPER BODY SUPPORT
DOSSIER À SUPPORT DU TORSE INTÉGRÉ

(30) Priorität: 23.12.2015 DE 102015122720
(43) Veröffentlichungstag der Anmeldung: 31.10.2018
(73) Patentinhaber: GRAMMER AG, 92224 Amberg (DE)
(72) Erfinder: BÜHLMEYER, Katja, 92281 Königstein (DE); HALLER, Erwin, 92262 Birgland (DE); LANDSHAMMER, Michael, 92289 Ursensollen (DE); HAID, Christian, 6020 Innsbruck (AT)
(74) Vertreter: Hannke, Christian
(86) Internationale Anmeldenummer: PCT/EP2016/080363
(87) Internationale Veröffentlichungsnummer: WO 2017/108442

(56) Entgegenhaltungen:
- US-A- 3 901 550
- US-B1- 6 550 858

## Beschreibung

Die Erfindung betrifft einen Fahrzeugsitz, bevorzugt für ein Nutzfahrzeug, welcher ein Sitzteil und ein Rückenlehnenteil umfasst, wobei das Rückenlehnenteil in Sitzrichtung eines Insassen des Fahrzeugsitzes betrachtet einen linken Anteil und einen rechten Anteil aufweist. Führer (im Folgenden auch Fahrer, Fahrzeugführer oder Insasse genannt) von Arbeitsmaschinen wie beispielsweise Gabelstapler müssen sehr oft längere Zeit rückwärtsfahren, um den engen Platzverhältnissen an ihrem Arbeitsplatz, insbesondere innerhalb einer Lagerhalle gerecht zu werden. Der Fahrer ist gezwungen, während dieser Fahrt seinen Kopf nach hinten zu drehen, um die Sichteinschränkung so gering wie möglich zu halten. Dies hat zur Folge, dass die Fahrzeugführer in einer unkomfortablen Position und insbesondere mit verdrehtem Oberkörper sitzen müssen, damit sie Einsicht in den Bereich hinter das Fahrzeug haben. In dieser gedrehten Sitzposition hat der Fahrzeugführer wenige Möglichkeiten, seinen Oberkörper abzustützen, da ein Standardfahrzeugsitz bestenfalls für eine Fahrt nach vorne bestmöglichen Komfort bieten kann. Es besteht zwar prinzipiell die Möglichkeit, den Oberkörper seitlich abzustützen, jedoch kann diese Abstützung nicht vollständig, sondern nur punktuell erfolgen. Außerdem besteht bei den Standardfahrzeugsitzen auch keine komfortable Ablagemöglichkeit für den rechten Arm. Die sehr schlechte Oberkörperabstützung führt zur schnelleren Ermüdung des Fahrers und kann auch längerfristige gesundheitliche Beeinträchtigungen mit sich bringen. Ein gattungsgemässer Sitz ist in US6550858 offenbart.

Es ist daher Aufgabe der vorliegenden Erfindung, einen Fahrzeugsitz zu schaffen, welcher zur Vermeidung der oben genannten Risiken zusätzliche Abstützmöglichkeiten für den Fahrzeugführer umfasst.

Diese Aufgabe wird gelöst von einem Fahrzeugsitz, bevorzugt für ein Nutzfahrzeug, welcher ein Sitzteil und ein Rückenlehnenteil umfasst, wobei das Rückenlehnenteil in Sitzrichtung eines Insassen des Fahrzeugsitzes betrachtet einen linken Anteil und einen rechten Anteil aufweist, und wobei ausgehend von einem oberen Ende des Rückenlehnenteils in einer Höhenrichtung des Rückenlehnenteils eine erste Aussparung auf dem linken Anteil sich bis zu einer ersten Distanz erstreckend und eine zweite Aussparung auf dem rechten Anteil sich bis zu einer zweiten Distanz erstreckend angeordnet sind, wobei die erste und die zweite Aussparung voneinander beabstandet und von einer vorderen Begrenzungsfläche bis zu einer hinteren Begrenzungsfläche des Rückenlehnenteils durchgehend angeordnet sind, und wobei die erste Distanz einen größeren Wert aufweist als die zweite Distanz.

Das Rückenlehnenteil stellt somit eine integrierte seitliche Oberkörperabstützung bereit, mittels welcher sich der Fahrzeugführer bei häufig auftretenden, langanhaltenden Rückwärtsfahrten, insbesondere bei Nutzfahrzeugen und/ oder Arbeitsmaschinen abstützen kann. Die Funktionalität der Abstützung wird durch eine spezielle Ausformung des Rückenteils des Fahrzeugsitzes realisiert, indem die zwei Aussparungen in Höhenrichtung dazu dienen, Oberarm und Unterarm komfortabel abzulegen.

Die Erfindung kann daher im Englischen auch als "Backwards View Support (BVS)" bezeichnet werden.

Insbesondere wird im Folgenden und anhand der Figuren ein Rückenlehnenteil gemäß einer Bauvariante 1 beschrieben, welches zur Abstützung der rechten Oberkörperseite geeignet ist. Es versteht sich, dass bei entsprechend spiegelbildlicher Ausgestaltung des Rückenlehnenteils gemäß einer Bauvariante 2 auch eine Abstützung der linken Oberkörperseite möglich wäre. Die folgenden Ausführungen sollen daher nicht auf die beschriebene Bauvariante 1 beschränkt sein, sondern gelten analog auch für die Bauvariante 2.

Insbesondere ist demnach vorgesehen, dass der Fahrzeugführer seinen rechten Arm von der Vorderseite des Sitzes zunächst durch die erste Aussparung und dann durch die zweite Aussparung führt. Insofern dient die Berandung der ersten Aussparung als Auflagemöglichkeit für den Oberarm und die Berandung der zweiten Aussparung als Auflagemöglichkeit für den Unterarm des Fahrzeugführers; hier ist insbesondere dafür gesorgt, dass der Unterarm bei Ablage auf dem Rückenpolster nicht vom Sitz abrutscht.

Gemäß einer bevorzugten Ausführungsform weisen dabei die erste und/ oder die zweite Aussparung an ihrem in Höhenrichtung des Rückenlehnenteils gesehen tiefsten Abschnitt einen kreisbogenförmigen Verlauf auf.

Der Komfort für den Fahrzeugführer kann nochmals entscheidend verbessert werden, wenn angrenzend an die erste Aussparung eine dritte Aussparung angeordnet ist, welche ausgehend von der vorderen Begrenzungsfläche in einer Tiefenrichtung des Rückenlehnenteils sich bis zu einer zwischen der vorderen Begrenzungsfläche und der hinteren Begrenzungsfläche angeordneten ersten Tiefe und ausgehend von der ersten Distanz in der Höhenrichtung des Rückenlehnenteils sich bis zu einer dritten Distanz erstreckend angeordnet ist.

Durch diese dritte Aussparung ist somit eine Art Mulde ausgestaltet, welche eine Art Verlängerung der ersten Aussparung nach unten darstellt. Diese dient zur Abstützung und komfortablen Anlehnung der rechten Oberkörperseite an das Rückenlehnenteil, wenn der Fahrzeugführer bei langanhaltender Rückwärtsfahrt eine gedrehte Sitzposition einnimmt. Bevorzugt ist diese dritte Aussparung nicht durchgehend, sondern nur bis zu einer bestimmten Tiefe des Rückenlehnenteils ausgestaltet, so dass der Oberkörper des Fahrzeugführers und insbesondere die rechte Seite des Oberkörpers bequem abgestützt werden.

Weiteren Komfort bietet eine vorteilhafte Ausgestaltung, gemäß der in Breitenrichtung des Rückenlehnenteils mittels der ersten und der zweiten Aussparung eine erste Erhöhung, mittels der ersten Aussparung eine zweite Erhöhung und/ oder mittels der zweiten Aussparung eine dritte Erhöhung ausgestaltet sind.

Die erste Erhöhung ist also bevorzugt an einem in Breitenrichtung betrachtet innen gelegenen Bereich des Rückenlehnenteils angeordnet. Die zweite Erhöhung ist bevorzugt an einem linken äußeren Rand des Rückenlehnenteils angeordnet und dient zur Anlehnung des Rückens. So benötigt der Fahrer bei einer Rückwärtsfahrt keinen großen Kraftaufwand, um die gedrehte Position zu halten. Außerdem stabilisieren die erste und die zweite Erhöhung den Körper des Fahrzeugführers bei einer Rückwärtsfahrt und/ oder ihn bei auftretenden Stößen generell sowie zur Seite hin.

Die dritte Erhöhung ist bevorzugt an einem rechten äußeren Rand des Rückenlehnenteils angeordnet und bildet einen Teil der Auflagefläche für den Unterarm des Fahrzeugführers.

Es kann insbesondere an der hinteren Begrenzung der ersten Erhöhung eine weitere, vierte Aussparung angeordnet sein, so dass die erste Erhöhung in Tiefenrichtung des Rückenlehnenteils nur bis zu einer bestimmten Tiefe, aber eben nicht von der vorderen Begrenzungsfläche bis zur hinteren Begrenzungsfläche des Rückenlehnenteils durchgehend ausgestaltet ist. Dies stellt nochmals eine Möglichkeit dar, den Arm des Fahrzeugführers und insbesondere den Abschnitt rund um den Ellbogen möglichst komfortabel abzulegen.

Bevorzugt ist die erste Erhöhung höher als die zweite und/ oder die dritte Erhöhung und/ oder bildet gleichzeitig den höchsten Punkt des Rückenlehnenteils aus. Die zweite Erhöhung ist bevorzugt höher als die dritte Erhöhung.

Dabei müssen die erste und/ oder die zweite Aussparung nicht generell geradlinig durch die Rückenlehne hindurchgehend angeordnet sein. Im Gegenteil kann durch eine geeignete Ausgestaltung der ersten und/ oder zweiten Aussparung gewährleistet sein, dass beispielsweise die physiologisch sinnvollste Anordnung des in die Aussparungen gelegten rechten Arms des Fahrzeugführers erzielt werden kann.

So ist es insbesondere denkbar, dass eine Richtung eines Verlaufs der ersten und/ oder zweiten Aussparung von der vorderen Begrenzungsfläche bis zur hinteren Begrenzungsfläche parallel oder unter Ausbildung eines Winkels zu einer Tiefenrichtung des Rückenlehnenteils ausgebildet ist.

Denkbar wäre, dass die Richtung des Verlaufs der ersten Aussparung von der vorderen Begrenzungsfläche bis zur hinteren Begrenzungsfläche von einem Startpunkt nach rechts verlaufend ausgestaltet ist. Ebenfalls wäre denkbar, dass die Richtung des Verlaufs der zweiten Aussparung von der vorderen Begrenzungsfläche bis zur hinteren Begrenzungsfläche von einem Startpunkt nach links verlaufend ausgestaltet ist. Ferner wäre es möglich, dass die Richtung des Verlaufs der ersten Aussparung zur Richtung des Verlaufs der zweiten Aussparung einen Winkel bildet, welcher einen Wert aus einem Bereich von 20° bis 120°, bevorzugt von 30° bis 90°, meist bevorzugt von 45°, 60° oder 75° aufweist.

Unter dem Begriff Verlauf kann dabei beispielsweise eine Linie verstanden werden, welche eine Verbindung zwischen den jeweiligen Mittelpunkten der durch die Aussparungen gebildeten Inkremente beispielsweise in Tiefenrichtung und/ oder Breitenrichtung, darstellt.

Ferner wäre es möglich, dass eine Breite der ersten und/ oder zweiten Aussparung von der vorderen Begrenzungsfläche bis zur hinteren Begrenzungsfläche zumindest teilweise gleichbleibend, sich verbreiternd und/ oder sich verjüngend ausgestaltet ist. Mit anderen Worten können die Aussparungen in Tiefenrichtung des Fahrzeugsitzes mit einer gleichbleibenden Breite oder sich verbreiternd oder sich verengend ausgestaltet sein. Dabei ist beispielsweise die jeweilige Breite der Aussparungen auf einer bestimmten Höhe der Rückenlehne zu verstehen.

Auch die zuletzt genannte Ausgestaltung sorgt dafür, dass den anatomischen Gegebenheiten des Arms des Fahrzeugführers Rechnung getragen wird. Beispielsweise kann die Breite der ersten Aussparung von der vorderen Begrenzungsfläche bis zur hinteren Begrenzungsfläche sich verjüngend und die Breite der zweiten Aussparung von der vorderen Begrenzungsfläche bis zur hinteren Begrenzungsfläche sich verbreiternd ausgestaltet sein, um dem Verlauf des in Richtung von der Schulter zur Hand hinwärts schmäler werdenden Arms zu folgen.

Weiterhin kann beispielsweise die Breite der ersten Aussparung einen Wert aufweisen, welcher größer ist als ein Wert der Breite der zweiten Aussparung, da der Oberarm eines Menschen in der Regel einen größeren Umfang aufweist und dementsprechend mehr Platz benötigt als dessen Unterarm.

Es ist gemäß einer weiteren bevorzugten Variante vorgesehen, dass die erste, die zweite und/ oder die dritte Aussparung entlang der Breitenrichtung und/ oder entlang der Tiefenrichtung des Rückenlehnenteils betrachtet zumindest teilweise einen elliptischen, parabelförmigen, kreisförmigen, bogenförmigen, geradlinigen oder stufenförmigen Verlauf oder Teile davon aufweisen. Beispielsweise können die drei Aussparungen als Freiform ausgestaltet sein und/ oder der Verlauf der drei Aussparungen kann jeweils unterschiedliche Abschnitte aufweisen.

Genauso gilt für eine bevorzugte Ausgestaltung des Rückenlehnenteils, dass die erste Tiefe und/ oder eine Gesamttiefe des Rückenlehnenteils sich entlang der Höhenrichtung des Rückenlehnenteils verändernd ausgestaltet sind. Beispielsweise weist die erste Tiefe an einem unteren Ende der dritten Aussparung einen Wert von Null auf und steigt dann bis zur Position der ersten Aussparung an, beispielsweise kontinuierlich. Ferner ist es bevorzugt, dass die Gesamttiefe des Rückenlehnenteils in Höhenrichtung von einem oberen Ende bis zu einem unteren Ende des Rückenlehnenteils ansteigt.

In der Praxis hat es sich ferner als vorteilhaft herausgestellt, wenn das Rückenlehnenteil höhenverstellbar ausgestaltet ist. Insbesondere ist es vorteilhaft, wenn das Rückenlehnenteil einen Tragrahmen umfasst, welcher hinsichtlich seiner Abmessung in Höhenrichtung des Rückenlehnenteils verstellbar ausgestaltet ist. Dieser Tragrahmen kann beispielsweise sich in Höhenrichtung des Rückenlehnenteils erstreckende Rohre, bevorzugt aus Metall wie einem Stahl, umfassen, welche einen ersten stationären Abschnitt und einen zweiten, zum ersten Abschnitt beweglich angeordneten Abschnitt ausbilden. Der erste Abschnitt kann beispielsweise mit dem Sitzteil des Fahrzeugsitzes verbunden angeordnet sein.

Rohre des ersten Abschnitts sind dabei beispielsweise in Rohre des zweiten Abschnitts eingeschoben und gegen diese verschiebbar angeordnet. Der Tragrahmen ist somit teleskopartig ausziehbar, womit die Gesamthöhe des Rückenlehnenteils verstellbar ist. Diese integrierte Höhenverstellbarkeit des Rückenlehnenteils realisiert eine bessere Anpassung an den Körperbau des Fahrzeugführers.

Vorteilhaft ist der Tragrahmen in einem Inneren des Rückenlehnenteils angeordnet, so dass nach außen hin bis auf einen unteren Bereich des Rückenlehnenteils keine Komponenten des Tragrahmens sichtbar und/ oder fühlbar sind.

Durch die genannten konstruktiven Maßnahmen soll einer schnellen Ermüdung des Fahrzeugführers entgegengewirkt werden. Auch wird etwaigen gesundheitlichen Beschwerden vorgebeugt.

Bauteile aus geschäumten Werkstoffen werden meist dann produziert, wenn ein niedriges Gewicht bei gleichzeitig einfachem Herstellungsverfahren erzielt werden soll. Ferner ist mittels des Schäumprozesses das Füllen einer Kavität mit nahezu beliebiger Form möglich. Insbesondere die beschriebenen Ausgestaltungen des Rückenlehnenteils lassen es daher vorteilhaft erscheinen, wenn das Rückenlehnenteil ein geschäumtes Bauteil umfasst, welches die erste, die zweite und die dritte Aussparung aufweist. Insbesondere kann dieses geschäumte Bauteil natürlich mit dem zweiten Abschnitt des Tragrahmens verbunden angeordnet sein, so dass das geschäumte Bauteil relativ zum Sitzteil nach oben und/ oder nach unten verlagerbar ist.

Es versteht sich, dass auf das geschäumte Bauteil noch ein Bezug aus einem Material wie Leder oder Leinen oder ähnlichem angeordnet sein kann. Dieser beeinflusst allerdings aufgrund seiner geringen Dicke und seiner Flexibilität erfahrungsgemäß nur in sehr geringem Maße die durch das geschäumte Bauteil vorgebbare Außenkontur des Rückenlehnenteils.

Erfahrungsgemäß gibt es bei den verschiedenen Fahrzeugführern nicht nur Unterschiede bezüglich des Körperbaus und/ oder der Körpergröße, sondern auch hinsichtlich individueller Vorlieben und Stärken. So ist wie bereits oben erwähnt der beschriebene Fahrzeugsitz für eine Unterstützung des Fahrzeugführers gedacht, wenn eine linke Hand des Fahrzeugführers am Lenkrad verbleibt und der rechte Arm hingegen mittels der ersten und/ oder zweiten Aussparung abgestützt wird. Hier wird beispielsweise die rechte Seite des Oberkörpers durch die dritte Aussparung gestützt.

Möchte ein Fahrzeugführer jedoch mit der rechten Hand lenken und stattdessen den linken Arm mittels der ersten und/ oder zweiten Aussparung und die linke Seite des Oberkörpers durch die dritte Aussparung stützen, so ist es vorteilhaft, wenn das Rückenlehnenteil umbaubar ist. Insbesondere hat es sich bewährt, wenn das geschäumte Bauteil hinsichtlich einer Mittelebene zwischen der vorderen und der hinteren Begrenzungsfläche symmetrisch ausgestaltet und/ oder auf dem Tragrahmen von vorne nach hinten umbaubar ist.

Vorteilhaft sind die Rohre des ersten Abschnitts des Tragrahmens, welche in die Rohre des zweiten Abschnitts eingeschoben und gegen diese verschiebbar angeordnet sind, vollständig aus diesen Rohren ausziehbar. Insbesondere ist der erste Abschnitt des Tragrahmens gegenüber dem zweiten Abschnitt lösbar angeordnet. Dann kann beispielsweise das geschäumte Bauteil mit dem ersten Abschnitt vom zweiten Abschnitt gelöst, anschließend um 180° um eine Achse in Höhenrichtung gedreht und wieder mit dem zweiten Abschnitt verbunden werden.

Aus der Praxis haben sich Rückenlehnenteile als besonders vorteilhaft erwiesen, welche mindestens eines der im Folgenden beschriebenen Merkmale aufweisen.

Demnach ist es vorteilhaft, wenn ein Verhältnis von der ersten Distanz zur zweiten Distanz einen Wert aus einem Bereich von 1,1 bis 2, bevorzugt von 1,2 bis 1,8, meist bevorzugt von 1,3 aufweist.

Weiterhin ist es vorteilhaft, wenn ein Verhältnis von einer Gesamthöhe des Rückenlehnenteils zur ersten Distanz einen Wert aus einem Bereich von 2 bis 4, bevorzugt von 2,5 bis 3,5, meist bevorzugt von 3,2 aufweist.

Ferner ist es vorteilhaft, wenn ein Verhältnis von einer Breite des linken Anteils zu einer Breite des rechten Anteils einen Wert aus einem Bereich von 1 bis 2, bevorzugt von 1,4 aufweist.

Vorteilhafte Ausführungsformen ergeben sich aus den Unteransprüchen.

Vorteile und Zweckmäßigkeiten sind der nachfolgenden Beschreibung in Verbindung mit der Zeichnung zu entnehmen.

Es zeigen:
- Fig. 1a-c: Standardansichten eines erfindungsgemäßen Fahrzeugsitzes mit einem Fahrzeugführer;
- Fig. 2a-e: eine Frontansicht mit zwei Querschnittsansichten des Fahrzeugsitzes gemäß Fig. 1a-c;
- Fig. 3a, 3b: bemaßte Frontansicht und Rückansicht des Fahrzeugsitzes gemäß Fig. 1a-c;
- Fig. 4a-4i: perspektivische Darstellungen des Fahrzeugsitzes gemäß Fig. 1a-c.

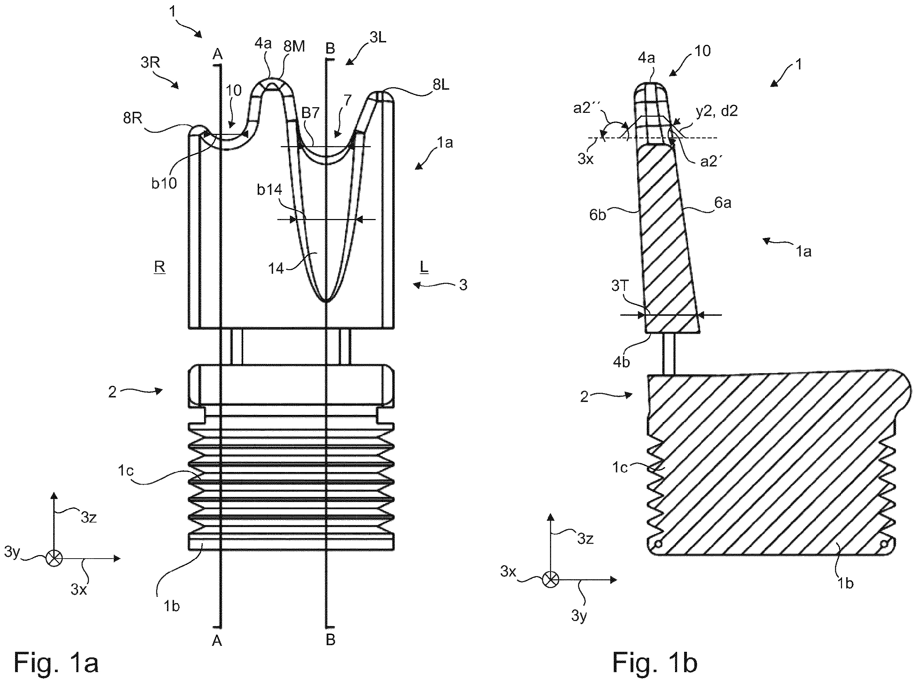

In den Fig. 1a-1c ist ein erfindungsgemäßer Fahrzeugsitz 1 gezeigt, welcher vorliegend ein Oberteil 1a und ein Unterteil 1b umfasst. Das Unterteil 1b kann beispielsweise starr mit einer hier nicht gezeigten Karosserie eines Nutzfahrzeugs verbunden werden und ist beispielsweise mittels eines Scherengestells und/ oder einer Feder-Dämpfer-Anordnung, welche in der Abbildung mittels eines Faltenbalges 1c verdeckt werden, höhenverstellbar und/ oder federnd gelagert mit dem Oberteil 1a verbunden.

Das Oberteil 1a weist ein Sitzteil 2 und ein Rückenlehnenteil 3 auf. Letzteres weist in Sitzrichtung eines nicht gezeigten Insassen des Fahrzeugsitzes 1 betrachtet einen linken Anteil 3L und einen rechten Anteil 3R auf.

Zum besseren Verständnis weisen die Figuren 1a-3b jeweils ein Koordinatensystem auf, welches die Höhenrichtung 3z, die Tiefenrichtung 3x sowie die Breitenrichtung 3y des Rückenlehnenteils 3 veranschaulicht. Außerdem ist gemäß Fig. 1a die linke Seite L und die rechte Seite R des Fahrzeugsitzes 1 aus Sicht eines Insassen veranschaulicht.

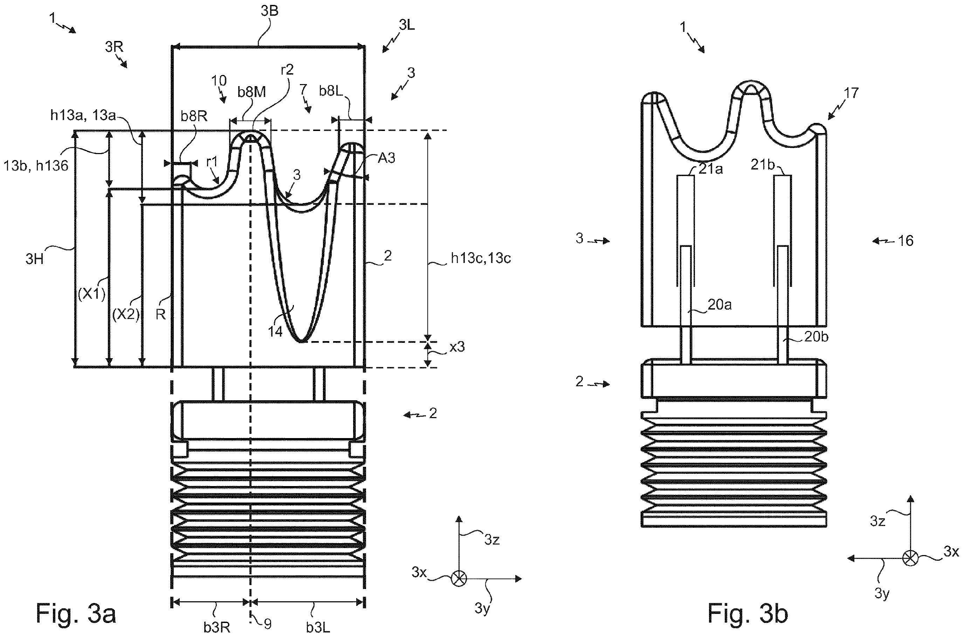

Ausgehend von einem oberen Ende 4a des Rückenlehnenteils 3 in der Höhenrichtung 3z des Rückenlehnenteils 3 ist nun eine erste Aussparung 7 auf dem linken Anteil 3L angeordnet, welche sich bis zu einer ersten Distanz 13a (siehe Fig. 3a) erstreckend angeordnet ist.

Ebenfalls ist ausgehend vom oberen Ende 4a des Rückenlehnenteils 3 in der Höhenrichtung 3z des Rückenlehnenteils 3 eine zweite Aussparung 10 auf dem rechten Anteil 3R sich bis zu einer zweiten Distanz 13b (siehe Fig. 3a) erstreckend angeordnet.

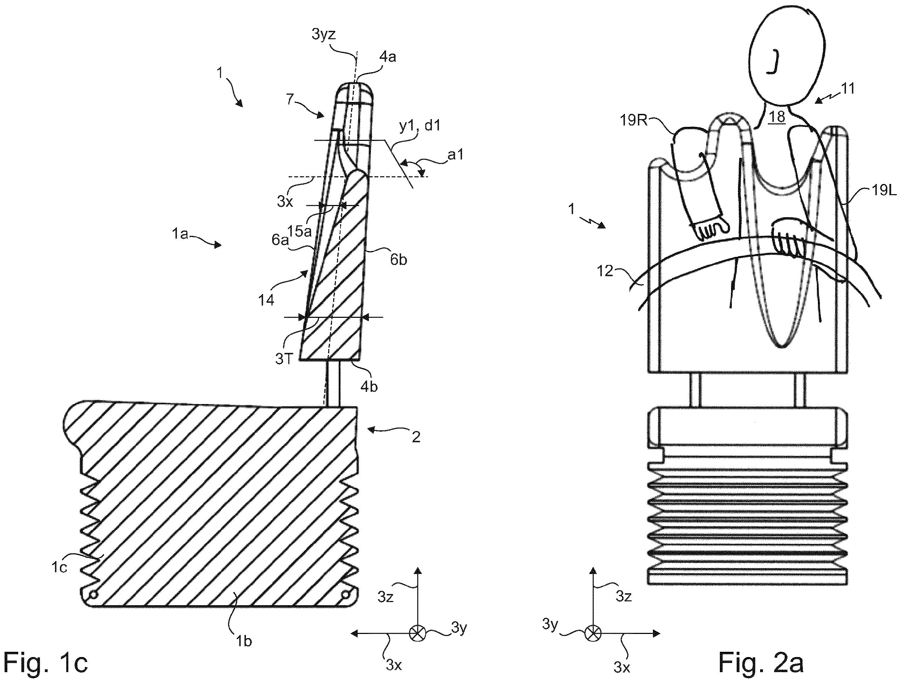

Dabei sind die erste 7 und die zweite Aussparung 10 voneinander beabstandet angeordnet. Aus den Querschnittsansichten entlang der in der Fig. 1a markierten Linien A-A (siehe Fig. 1b) und B-B (siehe Fig. 1c) wird deutlich, dass die erste 7 und die zweite Aussparung 10 von einer vorderen Begrenzungsfläche 6a bis zu einer hinteren Begrenzungsfläche 6b des Rückenlehnenteils 3 durchgehend angeordnet sind.

In Breitenrichtung 3y des Rückenlehnenteils 3 sind weiterhin eine erste Erhöhung 8M mittels der ersten 7 und der zweiten Aussparung 10, eine zweite Erhöhung 8L mittels der ersten Aussparung 7 und eine dritte Erhöhung 8R mittels der zweiten Aussparung 10 ausgestaltet.

Ferner ist angrenzend an die erste Aussparung 7 eine dritte Aussparung 14 angeordnet. Wie insbesondere in Fig. 1c zu sehen ist, ist diese dritte Aussparung 14 ausgehend von der vorderen Begrenzungsfläche 6a in der Tiefenrichtung 3x des Rückenlehnenteils 3 sich bis zu einer zwischen der vorderen Begrenzungsfläche 6a und der hinteren Begrenzungsfläche 6b angeordneten ersten Tiefe 15a erstreckend angeordnet.

Ebenfalls zu sehen ist, dass die erste Tiefe 15a und eine Gesamttiefe 3T des Rückenlehnenteils 3 sich entlang der Höhenrichtung 3z des Rückenlehnenteils 3 verändernd ausgestaltet sind. Die Gesamttiefe 3T ist demzufolge an einer beispielhaften Stelle markiert.

Dabei weist die Tiefe 15a einen Verlauf auf, welcher mit zunehmender Höhe des Rückenlehnenteils 3 in Höhenrichtung 3z einen ansteigenden Wert aufweist, und ist gemäß Fig. 1c an einer beispielhaften Stelle eingezeichnet. Insbesondere ist eine Steigung dieses Verlaufs zumindest abschnittsweise, bevorzugt über mindestens 90%, meist bevorzugt über die gesamte Höhe der dritten Aussparung konstant, so dass die Tiefe 15a gleichmäßig ansteigt.

Hier ist vorliegend die obere Berandung des Rückenlehnenteils mittels der ersten Aussparung 7 und der zweiten Aussparung 10 ausgestaltet. Dabei nimmt bevorzugt die maximale Breite der ersten Aussparung 7 die Gesamtbreite b3L des linken Anteils 3L und die maximale Breite der zweiten Aussparung 10 die Breite b3R des rechten Anteils 3R ein.

Die Fig. 1b und 1c veranschaulichen den Verlauf y1, y2 bzw. die jeweilige Richtung d1, d2 des Verlaufs y1, y2 der ersten 7 und der zweiten Aussparung 10 von der vorderen Begrenzungsfläche 6a bis zur hinteren Begrenzungsfläche 6b des Rückenlehnenteils 3 in Bezug auf dessen Tiefenrichtung 3x.

Dabei ist gezeigt, dass der erste Verlauf y1 vorliegend einen ersten Abschnitt und einen zweiten Abschnitt aufweist, wobei der erste Abschnitt unter Ausbildung eines Winkels a1 zur Tiefenrichtung 3x und der zweite Abschnitt parallel zur Tiefenrichtung 3x des Rückenlehnenteils 3 verlaufend angeordnet ist.

Ferner weist der zweite Verlauf y2 einen ersten, einen zweiten und einen dritten Abschnitt auf. Der zweite Abschnitt ist wiederum parallel zur Tiefenrichtung 3x des Rückenlehnenteils 3 verlaufend angeordnet. Der erste und der dritte Abschnitt sind jeweils unter Ausbildung eines Winkels a2', a2" zur Tiefenrichtung 3x verlaufend angeordnet.

Aufgrund der vorliegenden Freiformen ist gegeben, dass die erste 7 und die zweite Aussparung 10 entlang der Breitenrichtung 3y des Rückenlehnenteils 3 betrachtet verschiedene Abschnitte aufweisen. Einige davon sind vorliegend geradlinig oder bogenförmig. Die dritte Aussparung 14 weist vorliegend einen Verlauf auf, welcher einen Teil einer Ellipse darstellt.

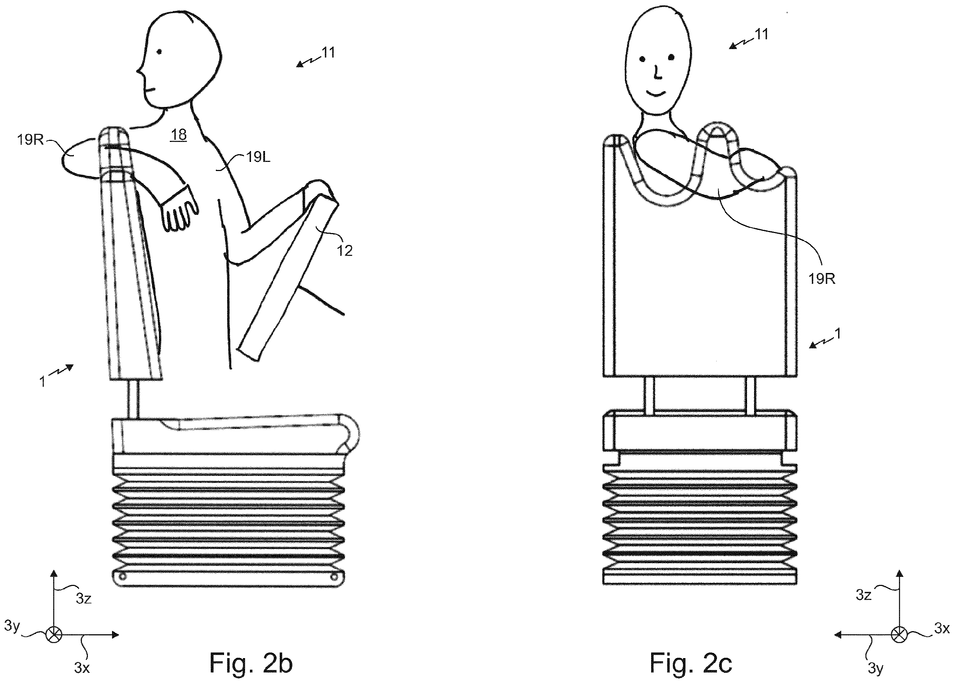

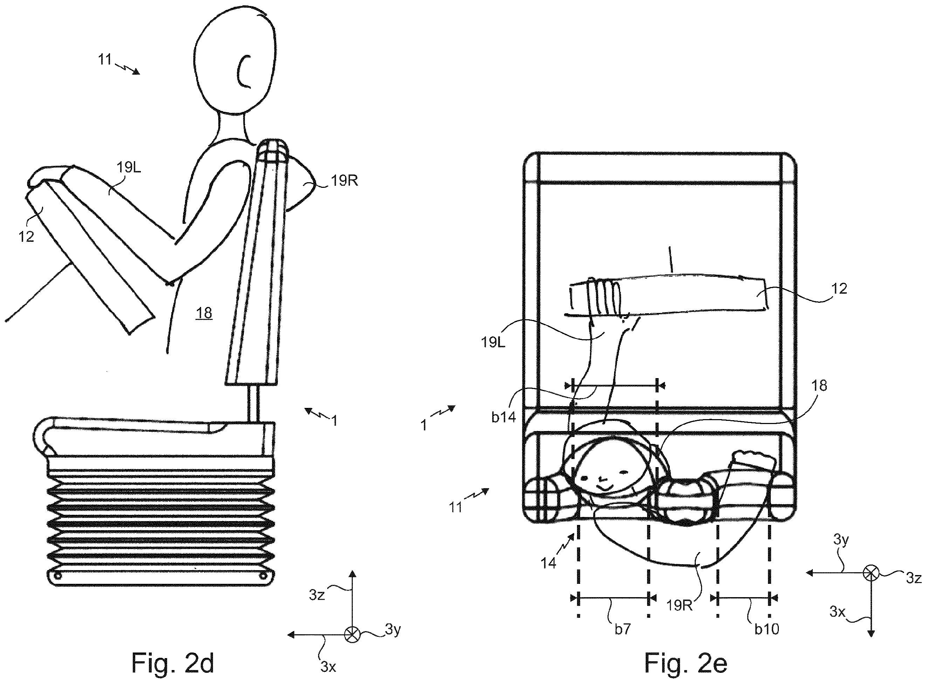

Die Figuren 2a-2e zeigen den erfindungsgemäßen Fahrzeugsitz 1 zusammen mit einem Insassen bzw. Fahrzeugführer 11, welcher sich in einer Rückwärtsfahrt befindet und somit seinen Oberkörper 18 wie vorgesehen mittels des Rückenlehnenteils 3 abstützen möchte. Der Fahrzeugführer 11 ist dabei in den Figuren 2a-2e transparent dargestellt, damit die relevanten Partien des Sitzes 1 und insbesondere des Rückenlehnenteils 3 sichtbar bleiben.

Dabei ergreift der Fahrzeugführer 11 mit seiner linken Hand des linken Arms 19L ein Lenkrad 12 des Fahrzeugs 1, während sein rechter Arm 19R mit dem Oberarm durch die erste Aussparung 7 und mit dem Unterarm durch die zweite Aussparung 10 hindurch geführt angeordnet ist (siehe insbesondere Fig. 2c und Fig. 2e). Dadurch ist eine optimale Abstützungsmöglichkeit für den rechten Arm 19R gegeben.

Zusätzlich liegt die rechte Seite des Oberkörpers 18 des Fahrzeugführers 11 und insbesondere der Teil unterhalb der Achsel bequem am Rückenlehnenteil 3 und insbesondere an der durch die dritte Aussparung 14 ausgebildeten Mulde äußerst komfortabel an.

Fig. 2e zeigt außerdem, dass der Verlauf der Breite b7 (an einer beispielhaften Stelle markiert) der ersten Aussparung 7 in Tiefenrichtung 3x des Rückenlehnenteils 3 verschiedene Abschnitte aufweist, von denen vorliegend einer mit einer sich verjüngenden, ein anderer mit einer im Wesentlichen gleichbleibenden und ein weiterer mit einer sich vergrößernden Breite ausgestaltet ist.

Ebenfalls ist gezeigt, dass der Verlauf der Breite b10 (an einer beispielhaften Stelle markiert) der zweiten Aussparung 10 in Tiefenrichtung 3x des Rückenlehnenteils 3 verschiedene Abschnitte aufweist, von denen vorliegend einer mit einer sich verjüngenden, ein anderer mit einer im Wesentlichen gleichbleibenden und ein weiterer mit einer sich vergrößernden Breite ausgestaltet ist.

Für die Breite b14 (an einer beispielhaften Stelle markiert) der dritten Aussparung 14 gilt vorliegend, dass diese in Tiefenrichtung 3x des Rückenlehnenteils 3 sich vergrößernd ausgestaltet ist.

Die Breiten b7, b10 und b14 der Aussparungen 7, 10, 14 sind vorliegend auch in Höhenrichtung 3z des Rückenlehnenteils 3 sich verändernd und insbesondere nach oben hin sich vergrößernd ausgestaltet (siehe hierzu insbesondere Fig. 1a mit beispielhaft markierten Breiten b7, b10, b14 der Aussparungen 7, 10, 14).

Gemäß Fig. 3a sind einige Abmaße des erfindungsgemäßen Rückenlehnenteils 3 veranschaulicht. Dabei ist anhand einer virtuellen Trennlinie 9 gezeigt, wo der linke Anteil 3L und der rechte Anteil 3R des Rückenlehnenteils 3 aufeinandertreffen.

Die folgenden Beispielwerte sind Teil einer bevorzugten Ausführungsform des erfindungsgemäßen Fahrzeugsitzes 1:
Gesamthöhe 3H des Rückenlehnenteils 3: 465 mm
Gesamtbreite 3B des Rückenlehnenteils 3: 380 mm
Breite b3L des linken Anteils 3L des Rückenlehnenteils 3: 222,5 mm
Breite b3R des rechten Anteils 3R des Rückenlehnenteils 3: 157,5 mm
Höhe h13a der ersten Distanz 13a: 145 mm
Höhe h13b der zweiten Distanz 13b: 115 mm
Höhe h13c der dritten Distanz 13c: 412,5 mm
Wert des Referenzmaßes x1: 350 mm
Wert des Referenzmaßes x2: 320 mm
Wert des Referenzmaßes x3: 52,5 mm
Maß des Radius' r1 der Rundung der zweiten Aussparung 10: 40 mm
Maß des Radius' r2 der Rundung der ersten Erhöhung 8M: 40 mm
Maß des Radius' r3 der Rundung der ersten Aussparung 7: 55 mm
Breite b8M der ersten Erhöhung 8M: 82,5 mm
Breite b8L der zweiten Erhöhung 8L: 50 mm
Breite b8R der dritten Erhöhung 8R: 40 mm
Winkel a3 zwischen einem Verlauf der linken Seite L des Rückenlehnenteils 3 und dem Abschnitt der ersten Aussparung 7, welcher auf die zweite Erhöhung 8L folgt: 20°

Wie quantitativ aus den Abmaßen und natürlich auch rein qualitativ aus der Fig. 3a hervorgeht, weist die erste Distanz 13a einen größeren Wert auf als die zweite Distanz 13b. Die dritte Aussparung 14 ist ausgehend von der ersten Distanz 13a in der Höhenrichtung 3z des Rückenlehnenteils 3 sich bis zur dritten Distanz 13c erstreckend angeordnet.

Gemäß Fig. 3b ist das Innere des Rückenlehnenteils 3 gezeigt, das vorliegend einen Tragrahmen 16 umfasst. Dieser weist zwei Rohrpaare aus den Rohren 20a, 20b; 21a, 21b aus hohlzylinderförmigen Stahlrohren auf, wobei das erste Rohrpaar aus den Rohren 20a, 20b einen ersten stationären Abschnitt des Tragrahmens 16 und das zweite Rohrpaar aus den Rohren 21a, 21b einen zweiten beweglichen Abschnitt des Tragrahmens 16 ausbilden.

Die Rohre 20a, 20b; 21a, 21b sind dabei sich im Wesentlichen in Höhenrichtung 3z des Rückenlehnenteils 3 erstreckend angeordnet. Während der erste Abschnitt des Tragrahmens 16 mit dem Sitzteil 2 fest verbunden ist, ist der zweite Abschnitt des Tragrahmens 16 mit dem Rückenlehnenteil 3 verbunden. Dieses umfasst vorliegend ein geschäumtes Bauteil 17, welches die erste 7, die zweite 10 und die dritte Aussparung 14 aufweist.

Die Rohre 20a, 20b des ersten Abschnitts sind dabei beispielsweise in den Rohren 21a, 21b des zweiten Abschnitts eingeschoben angeordnet und gegen diese verschiebbar angeordnet. Der Tragrahmen 16 ist somit teleskopartig ausziehbar, womit die Gesamthöhe 3H (siehe Fig. 3a) des Rückenlehnenteils 3 verstellbar und einstellbar ist.

Vorliegend ist der Tragrahmen 16 in einem Inneren des Rückenlehnenteils 3 angeordnet und die Rohre 20a, 20b, 21a, 21b nur aus Darstellungsgründen eingezeichnet, so dass nach außen hin bis auf einen unteren Bereich der Rohre 20a, 20b keine Komponenten des Tragrahmens 16 sichtbar sind.

Es wäre vorstellbar, dass das geschäumte Bauteil 17 hinsichtlich einer Mittelebene 3yz (siehe Fig. 1c) des Rückenlehnenteils 3 zwischen der vorderen 6a und der hinteren Begrenzungsfläche 6b symmetrisch ausgestaltet und/ oder auf dem Tragrahmen 16 von vorne nach hinten umbaubar ist. Die Mittelebene 3yz wird dabei von der Breitenrichtung 3y des Rückenlehnenteils 3 und einer Linie aufgespannt, deren Punkte zur vorderen Begrenzungsfläche 6a und zur hinteren Begrenzungsfläche 6b jeweils den gleichen Abstand aufweisen. Diese Linie liegt dabei in einer durch die Höhenrichtung 3z und die Längsrichtung 3x aufgespannten Ebene.

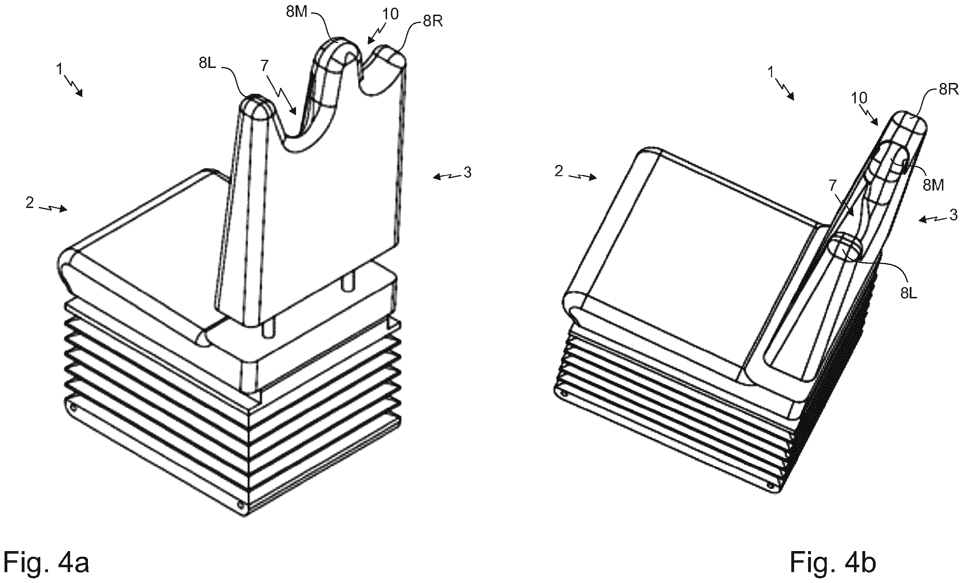

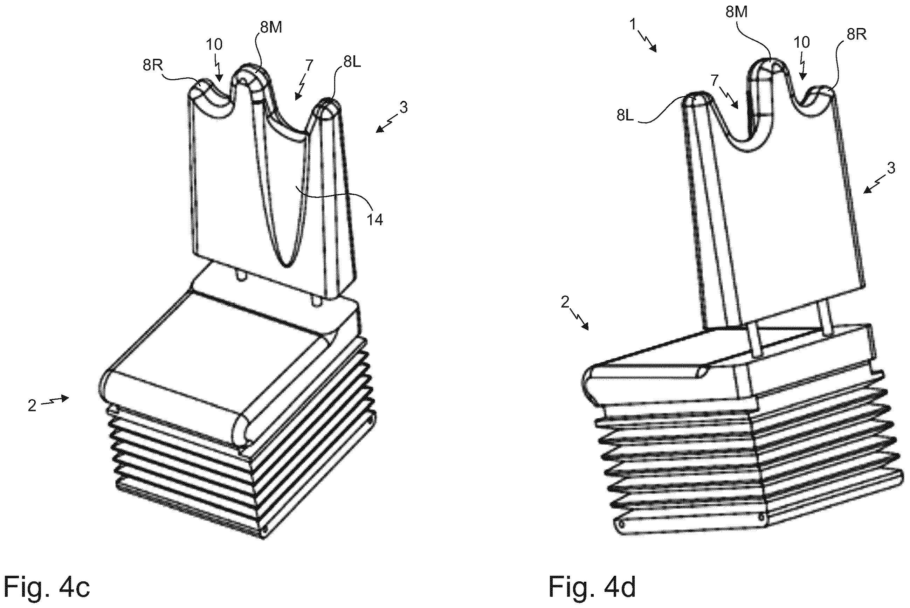

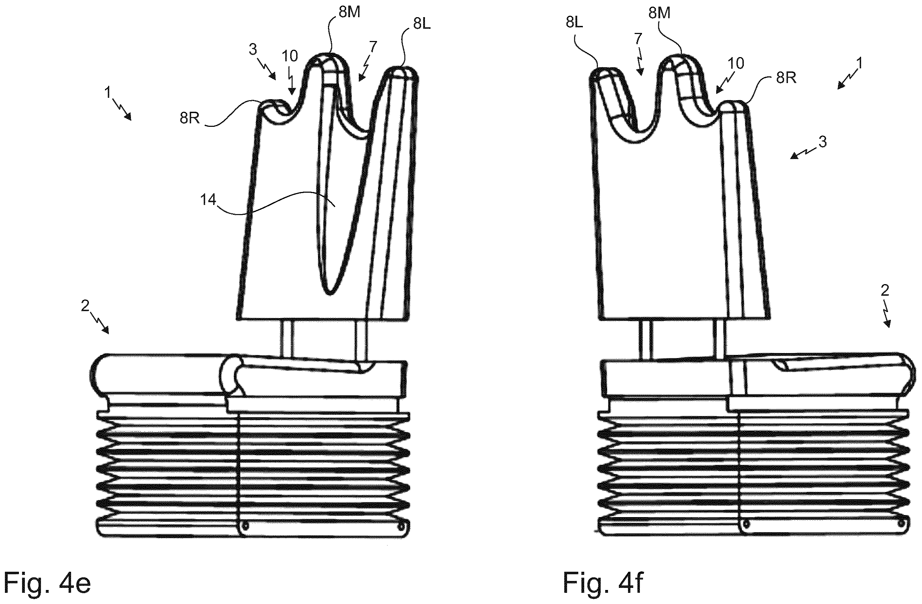

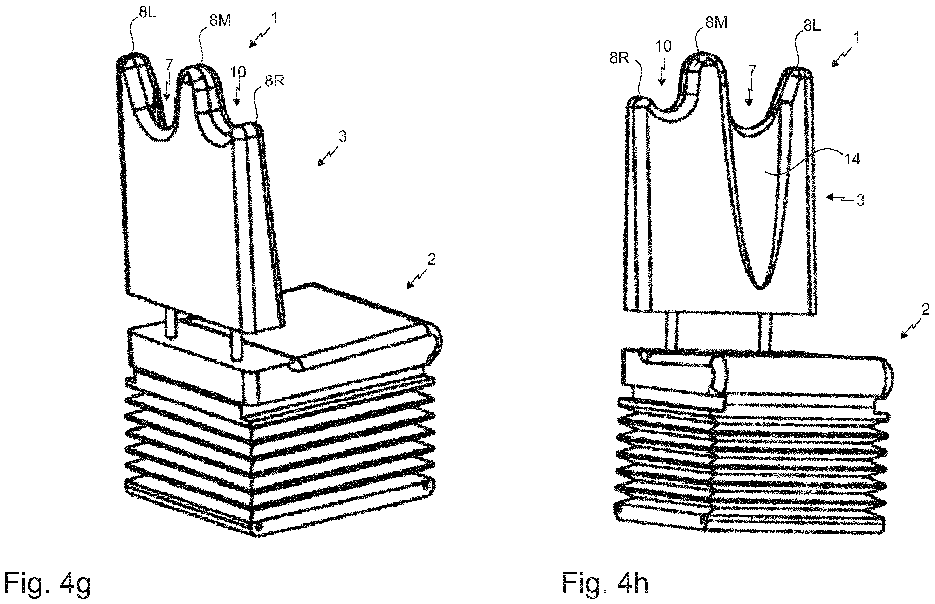

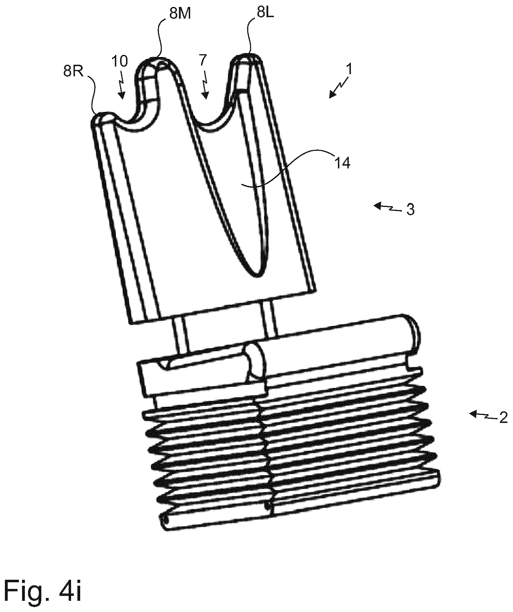

Gemäß den Figuren 4a-4i sind verschiedene perspektivische Darstellungen des erfindungsgemäßen Fahrzeugsitzes 1 mit Sitzteil 2 und Rückenlehnenteil 3 gezeigt. Verdeutlicht sind hierbei nochmals die Position und der Verlauf der ersten 7, zweiten 10 und dritten Aussparung 14 sowie der ersten 8M, zweiten 8L und dritten Erhöhung 8R.

### Bezugszeichenliste

- 1: Fahrzeugsitz
- 1a: Oberteil
- 1b: Unterteil
- 1c: Faltenbalg
- 2: Sitzteil
- 3: Rückenlehnenteil
- 3B: Gesamtbreite
- 3H: Gesamthöhe
- 3L: linker Anteil
- 3R: rechter Anteil
- 3T: Gesamttiefe
- 3x: Tiefenrichtung
- 3y: Breitenrichtung
- 3z: Höhenrichtung
- 3yz: Mittelebene
- 4a: oberes Ende
- 4b: unteres Ende
- 6a: vordere Begrenzungsfläche
- 6b: hintere Begrenzungsfläche
- 7, 10, 14: Aussparungen
- 8L, 8M, 8R: Erhöhung
- 9: virtuelle Trennlinie
- 11: Fahrzeugführer
- 12: Lenkrad
- 13a, 13b, 13c: Distanz
- 15a: Tiefe
- 16: Tragrahmen
- 17: geschäumtes Bauteil
- 18: Oberkörper
- 19L, 19R: Arm
- 20a, 20b, 21a, 21b: Rohr
- a1, a2, a3: Winkel
- b3L, b3R, b7, b10, b14: Breite
- b8L, b8M, b8R: Breite
- h13a, h13b, h13c: Höhe
- L: Linke Seite
- d1, d2: Richtung
- r1, r2, r3: Radius
- R: Rechte Seite
- x1, x2, x3: Distanz
- y1, y2: Verlauf

## Patentansprüche

1. Fahrzeugsitz (1), bevorzugt für ein Nutzfahrzeug, welcher ein Sitzteil (2) und ein Rückenlehnenteil (3) umfasst, wobei das Rückenlehnenteil (3) in Sitzrichtung eines Insassen des Fahrzeugsitzes (1) betrachtet einen linken Anteil (3L) und einen rechten Anteil (3R) aufweist, wobei ausgehend von einem oberen Ende (4a) des Rückenlehnenteils (3) in einer Höhenrichtung (3z) des Rückenlehnenteils (3) eine erste Aussparung (7) auf dem linken Anteil (3L) sich bis zu einer ersten Distanz (13a) erstreckend und eine zweite Aussparung (10) auf dem rechten Anteil (3R) sich bis zu einer zweiten Distanz (13b) erstreckend angeordnet sind, wobei die erste (7) und die zweite Aussparung (10) voneinander beabstandet und von einer vorderen Begrenzungsfläche (6a) bis zu einer hinteren Begrenzungsfläche (6b) des Rückenlehnenteils (3) durchgehend angeordnet sind, **dadurch gekennzeichnet, dass** die erste Distanz (13a) einen größeren Wert aufweist als die zweite Distanz (13b).

2. Fahrzeugsitz (1) nach Anspruch 1,
**dadurch gekennzeichnet, dass**
angrenzend an die erste Aussparung (7) eine dritte Aussparung (14) angeordnet ist, welche ausgehend von der vorderen Begrenzungsfläche (6a) in einer Tiefenrichtung (3x) des Rückenlehnenteils (3) sich bis zu einer zwischen der vorderen Begrenzungsfläche (6a) und der hinteren Begrenzungsfläche (6b) angeordneten ersten Tiefe (15a) und ausgehend von der ersten Distanz (13a) in der Höhenrichtung (3z) des Rückenlehnenteils (3) sich bis zu einer dritten Distanz (13c) erstreckend angeordnet ist.

3. Fahrzeugsitz (1) nach Anspruch 1 oder 2,
**dadurch gekennzeichnet, dass**
in Breitenrichtung (3y) des Rückenlehnenteils (3) mittels der ersten (7) und der zweiten Aussparung (10) eine erste Erhöhung (8M), mittels der ersten Aussparung (7) eine zweite Erhöhung (8L) und/ oder mittels der zweiten Aussparung (10) eine dritte Erhöhung (8R) ausgestaltet sind.

4. Fahrzeugsitz (1) nach einem der vorhergehenden Ansprüche,
**dadurch gekennzeichnet, dass**
eine Richtung (d1, d2) eines Verlaufs (y1, y2) der ersten (7) und/ oder zweiten Aussparung (10) von der vorderen Begrenzungsfläche (6a) bis zur hinteren Begrenzungsfläche (6b) parallel oder unter Ausbildung eines Winkels (a1, a2', a2") zu einer Tiefenrichtung (3x) des Rückenlehnenteils (3) ausgebildet ist.

5. Fahrzeugsitz (1) nach einem der vorhergehenden Ansprüche,
**dadurch gekennzeichnet, dass**
eine Breite (b7, b10) der ersten (7) und/ oder zweiten Aussparung (10) von der vorderen Begrenzungsfläche (6a) bis zur hinteren Begrenzungsfläche (6b) zumindest teilweise gleichbleibend, sich verbreiternd und/ oder sich verjüngend ausgestaltet ist.

6. Fahrzeugsitz (1) nach einem der vorhergehenden Ansprüche,
**dadurch gekennzeichnet, dass**
die erste (7), die zweite (10) und/ oder die dritte Aussparung (14) entlang der Breitenrichtung (3y) und/ oder entlang der Tiefenrichtung (3x) des Rückenlehnenteils (3) betrachtet zumindest teilweise einen elliptischen, parabelförmigen, kreisförmigen, bogenförmigen, geradlinigen oder stufenförmigen Verlauf oder Teile davon aufweisen.

7. Fahrzeugsitz (1) nach einem der vorhergehenden Ansprüche,
**dadurch gekennzeichnet, dass**
die erste Tiefe (15a) und/ oder eine Gesamttiefe (3T) des Rückenlehnenteils (3) sich entlang der Höhenrichtung (3z) des Rückenlehnenteils (3) verändernd ausgestaltet sind.

8. Fahrzeugsitz (1) nach einem der vorhergehenden Ansprüche,
**dadurch gekennzeichnet, dass**
das Rückenlehnenteil (3) höhenverstellbar ausgestaltet ist.

9. Fahrzeugsitz (1) nach Anspruch 8,
**dadurch gekennzeichnet, dass**
das Rückenlehnenteil (3) einen Tragrahmen (16) umfasst, welcher hinsichtlich seiner Abmessung in Höhenrichtung (3z) des Rückenlehnenteils (3) verstellbar ausgestaltet ist.

10. Fahrzeugsitz (1) nach einem der vorhergehenden Ansprüche,
**dadurch gekennzeichnet, dass**
das Rückenlehnenteil (3) ein geschäumtes Bauteil (17) umfasst, welches die erste (7), die zweite (10) und die dritte Aussparung (14) aufweist.

11. Fahrzeugsitz (1) nach einem der Ansprüche 9 oder 10,
**dadurch gekennzeichnet, dass**
das geschäumte Bauteil (17) hinsichtlich einer Mittelebene (3yz) zwischen der vorderen (6a) und der hinteren Begrenzungsfläche (6b) symmetrisch ausgestaltet und/ oder auf dem Tragrahmen (16) von vorne nach hinten umbaubar ist.

12. Fahrzeugsitz (1) nach einem der vorhergehenden Ansprüche,
**dadurch gekennzeichnet, dass**
ein Verhältnis von der ersten Distanz (13a) zur zweiten Distanz (13b) einen Wert aus einem Bereich von 1,1 bis 2, bevorzugt von 1,2 bis 1,8, meist bevorzugt von 1,3 aufweist.

13. Fahrzeugsitz (1) nach einem der vorhergehenden Ansprüche,
**dadurch gekennzeichnet, dass**
ein Verhältnis von einer Gesamthöhe (3H) des Rückenlehnenteils (3) zur ersten Distanz (13a) einen Wert aus einem Bereich von 2 bis 4, bevorzugt von 2,5 bis 3,5, meist bevorzugt von 3,2 aufweist.

14. Fahrzeugsitz (1) nach
einem der vorhergehenden Ansprüche,
**dadurch gekennzeichnet, dass**
ein Verhältnis von einer Breite (b3L) des linken Anteils (3L) zu einer Breite (b3R) des rechten Anteils (3R) einen Wert aus einem Bereich von 1 bis 2, bevorzugt von 1,4 aufweist.

## Claims

1. Vehicle seat (1), preferably for a utility vehicle, comprising a seat part (2) and a backrest part (3), the backrest part (3) comprising a left portion (3L) and a right portion (3R) as seen in the seating direction of an occupant of the vehicle seat (1),
wherein,
in a height direction (3z) of the backrest part (3), starting from an upper end (4a) of the backrest part (3), a first recess (7) is arranged on the left portion (3L) so as to extend as far as a first distance (13a), and a second recess (10) is arranged on the right portion (3R) so as to extend as far as a second distance (13b), the first (7) and the second recess (10) being mutually spaced and being continuous from a front border surface (6a) as far as a rear border surface (6b) of the backrest part (3),
**characterised in that**
the first distance (13a) is of a larger value than that of the second distance (13b).

2. Vehicle seat (1) according to claim 1,
**characterised in that**
the first recess (7) is adjoined by a third recess (14), which, in a depth direction (3x) of the backrest part (3), starting from the front border surface (6a), extends as far as a first depth (15a) arranged between the front border surface (6a) and the rear border surface (6b), and which, in the height direction (3z) of the backrest part (3), starting from the first distance (13a), extends as far as a third distance (13c).

3. Vehicle seat (1) according to either claim 1 or claim 2,
**characterised in that**,
in a width direction (3y) of the backrest part (3), a first elevation (8M) is formed by the first (7) and second recess (10), a second elevation (8L) is formed by the first recess (7), and/or a third elevation (8R) is formed by the second recess (10).

4. Vehicle seat (1) according to any of the preceding claims,
**characterised in that**
a direction (d1, d2) of a progression (y1, y2) of the first (7) and/or second recess (10) from the front border surface (6a) as far as the rear border surface (6b) is in parallel with or at an angle (a1, a2', a2") to a depth direction (3x) of the backrest part (3).

5. Vehicle seat (1) according to any of the preceding claims,
**characterised in that**
a width (b7, b10) of the first (7) and/or second recess (10) at least in part remains the same, widens and/or tapers from the front border surface (6a) as far as the rear border surface (6b).

6. Vehicle seat (1) according to any of the preceding claims,
**characterised in that**
the first (7), second (10) and/or third recess (14) have at least in part an elliptical, parabolic, circular, curved, linear or stepped progression, or parts thereof, as seen in the width direction (3y) and/or the depth direction (3x) of the backrest part (3).

7. Vehicle seat (1) according to any of the preceding claims,
**characterised in that**
the first depth (15a) and/or an overall depth (3T) of the backrest part (3) vary along the height direction (3z) of the backrest part (3).

8. Vehicle seat (1) according to any of the preceding claims,
**characterised in that**
the backrest part (3) is height-adjustable.

9. Vehicle seat (1) according to claim 8,
**characterised in that**
the backrest part (3) comprises a support frame (16) that can be adjusted with regard to the dimension thereof in the height direction (3z) of the backrest part (3).

10. Vehicle seat (1) according to any of the preceding claims,
**characterised in that**
the backrest part (3) comprises a foamed component (17) having the first (7), second (10) and third recess (14).

11. Vehicle seat (1) according to either claim 9 or claim 10,
**characterised in that**,
in relation to a midplane (3yz) between the front (6a) and rear border surface (6b), the foamed component (17) is symmetrical and/or can be refitted on the support frame (16) from the front to the rear.

12. Vehicle seat (1) according to any of the preceding claims,
**characterised in that**
a ratio of the first distance (13a) to the second distance (13b) is of a value in the range of 1.1 to 2, preferably from 1.2 to 1.8, most preferably 1.3.

13. Vehicle seat (1) according to any of the preceding claims,
**characterised in that**
a ratio of an overall height (3H) of the backrest part (3) to the first distance (13a) is of a value in the range of 2 to 4, preferably 2.5 to 3.5, most preferably 3.2.

14. Vehicle seat (1) according to any of the preceding claims,
**characterised in that**
a ratio of a width (b3L) of the left portion (3L) to a width (b3R) of the right portion (3R) is of a value in the range of 1 to 2, preferably 1.4.

## Revendications

1. Siège de véhicule (1), de préférence pour un véhicule utilitaire, lequel comporte une partie assise (2) et une partie dossier (3), la partie dossier (3) présentant une partie gauche (3L) et une partie droite (3R) considérées dans la direction d'assise d'un occupant du siège de véhicule,
dans lequel
à partir d'une extrémité supérieure (4a) de la partie dossier (3) dans une direction verticale (3z) de la partie dossier (3), un premier évidement (7) est disposé sur la partie gauche (3L) de manière à s'étendre jusqu'à une première distance (13a) et un deuxième évidement (10) est disposé sur la partie droite (3R) de manière à s'étendre jusqu'à une deuxième distance (13b), le premier (7) et le deuxième évidement (10) étant espacés l'un de l'autre et disposés de manière continue à partir d'une surface limite avant (6a) jusqu'à une surface limite arrière (6b) de la partie dossier (3),
**caractérisé par le fait que**
la première distance (13a) présente une plus grande valeur que la deuxième distance (13b).

2. Siège de véhicule (1) selon la revendication 1,
**caractérisé par le fait que**
de façon adjacente au premier évidement (7) est disposé un troisième évidement (14), lequel, à partir de la surface limite avant (6a), dans une direction de la profondeur (3x) de la partie dossier (3), est disposé de manière à s'étendre jusqu'à une première profondeur (15a) disposée entre la surface limite avant (6a) et la surface limite arrière (6b), et qui, à partir de la première distance (13a), dans la direction de la hauteur (3z) de la partie dossier (3), est disposé de manière à s'étendre jusqu'à une troisième distance (13c).

3. Siège de véhicule (1) selon l'une des revendications 1 ou 2,
**caractérisé par le fait que**
dans une direction de la largeur (3y) de la partie dossier (3), une première élévation (8M) est formée par le premier (7) et le deuxième évidement (10), une deuxième élévation (8L) est formée par le premier évidement (7), et/ou une troisième élévation (8R) est formée par le deuxième évidement (10).

4. Siège de véhicule (1) selon l'une quelconque des revendications précédentes,
**caractérisé par le fait qu'**
une direction (d1, d2) d'une courbe (y1, y2) du premier (7) et/ou du deuxième évidement (10) de la surface limite avant (6a) jusqu'à la surface limite arrière (6b) est parallèle à ou avec formation d'un angle (a1, a2', a2") par rapport à une direction de la profondeur (3x) de la partie dossier (3).

5. Siège de véhicule (1) selon l'une quelconque des revendications précédentes,
**caractérisé par le fait qu'**
une largeur (b7, b10) du premier (7) et/ou du deuxième évidement (10) au moins en partie reste le même, s'élargit ou s'effile de la surface limite avant (6a) jusqu'à la surface limite arrière (6b).

6. Siège de véhicule (1) selon l'une quelconque des revendications précédentes,
**caractérisé par le fait que**
le premier (7), le deuxième (10) et/ou le troisième évidement (14), ont au moins partiellement un profil elliptique, parabolique, circulaire, incurvé, rectiligne ou étagé, ou des parties de celui-ci, considéré le long de la direction de la largeur (3y) et /ou le long de la direction de la profondeur (3x) de la partie dossier (3).

7. Siège de véhicule (1) selon l'une quelconque des revendications précédentes,
**caractérisé par le fait que**
la première profondeur (15a) et/ou une profondeur totale (3T) de la partie dossier (3) sont disposées changeant dans la direction de la hauteur (3z) de la partie dossier (3).

8. Siège de véhicule (1) selon l'une quelconque des revendications précédentes, **caractérisé par le fait que** la partie dossier (3) est réalisée réglable en hauteur.

9. Siège de véhicule (1) selon la revendication 8,
**caractérisé par le fait que**
la partie dossier (3) comporte un cadre de support (16), lequel est réalisé réglable en ce qui concerne sa dimension dans la direction de la hauteur (3z) de la partie dossier (3).

10. Siège de véhicule (1) selon l'une des revendications précédentes,
**caractérisé par le fait que**
la partie dossier (3) comporte un composant en mousse (17), lequel présente le premier (7), le deuxième (10) et le troisième évidement (14).

11. Siège de véhicule (1) selon l'une des revendications 9 ou 10,
**caractérisé par le fait que**
par rapport à un plan médian (3yz) entre la surface limite avant (6a) et la surface limite arrière (6b), le composant en mousse (17) est disposé symétrique et/ou peut être rémonté sur le cadre de support (16) de l'avant vers l'arrière.

12. Siège de véhicule (1) selon l'une des revendications précédentes,
**caractérisé par le fait qu'**
un rapport de la première distance (13a) à la deuxième distance (13b) est d'une valeur dans une plage de 1,1 à 2, de préférence de 1,2 à 1,8, de la façon que l'on préfère le plus de 1,3.

13. Siège de véhicule (1) selon l'une des revendications précédentes,
**caractérisé par le fait qu'**
un rapport d'une hauteur totale (3H) de la partie dossier (3) à la première distance (13a) est d'une valeur dans une plage de 2 à 4, de préférence de 2,5 à 3,5, de la façon que l'on préfère le plus de 3,2.

14. Siège de véhicule (2) selon l'une quelconque des revendications précédentes,
**caractérisé par le fait qu'**
un rapport d'une largeur (b3L) de la partie gauche (3L) à une largeur (b3R) de la partie droite (3R) est d'une valeur dans une plage de 1 à 2, de préférence de 1,4.
